(19) Europäisches Patentamt
European Patent Office
Office européen des brevets

(11) **EP 2 218 286 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **08862669.2**

(22) Anmeldetag: **05.12.2008**

(51) Int Cl.:
*H04W 52/02* (2009.01)     *H04W 84/18* (2009.01)

(86) Internationale Anmeldenummer:
**PCT/EP2008/066852**

(87) Internationale Veröffentlichungsnummer:
**WO 2009/077353 (25.06.2009 Gazette 2009/26)**

(54) **ENERGIEEFFIZIENTER AUSTAUSCH VON DATEN IN EINEM DRAHTLOSEN SENSORNETZWERK**

ENERGY-EFFICIENT EXCHANGE OF DATA IN A WIRELESS SENSOR NETWORK

ÉCHANGE DE DONNÉES ÉNERGÉTIQUEMENT EFFICACE DANS UN RÉSEAU DE CAPTEURS SANS FIL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.12.2007 DE 102007060187**

(43) Veröffentlichungstag der Anmeldung:
**18.08.2010 Patentblatt 2010/33**

(73) Patentinhaber: **Siemens Aktiengesellschaft**
**80333 München (DE)**

(72) Erfinder:
• **KUHNERT, Matthias**
**70597 Stuttgart (DE)**
• **VICARI, Norbert**
**81827 München (DE)**

(56) Entgegenhaltungen:
• **J. POLASTRE ET AL-: "Versatile Low Power Media Access for Wireless Sensor Networks"" PROCEEDINGS OF THE SECOND ACM CONFERENCE ON EMBEDDED NETWORK SENSOR SYSTEMS (SENSYS'04), 3. November 2005 (2005-11-03), XP002524002 in der Anmeldung erwähnt**

• **WEI YE ET AL: "An energy-efficient MAC protocol for wireless sensor networks" PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, Bd. 3, 23. Juni 2002 (2002-06-23), Seiten 1567-1576, XP010593724 ISBN: 978-0-7803-7476-8 in der Anmeldung erwähnt**

• **CHANGSU SUH ET AL: "A Traffic Aware, Energy Efficient MAC Protocol for Wireless Sensor Networks" CIRCUITS AND SYSTEMS, 2005. ISCAS 2005. IEEE INTERNATIONAL SYMPOSIUM O N KOBE, JAPAN 23-26 MAY 2005, PISCATAWAY, NJ, USA,IEEE, PISCATAWAY, NJ, USA, 23. Mai 2005 (2005-05-23), Seiten 2975-2978, XP010816217 ISBN: 978-0-7803-8834-5**

• **HUAMING LI ET AL: "An Ultra-low-power Medium Access Control Protocol for Body Sensor Network" ENGINEERING IN MEDICINE AND BIOLOGY SOCIETY, 2005. IEEE-EMBS 2005. 27T H ANNUAL INTERNATIONAL CONFERENCE OF THE SHANGHAI, CHINA 01-04 SEPT. 2005, PISCATAWAY, NJ, USA,IEEE, 1. September 2005 (2005-09-01), Seiten 2451-2454, XP010908745 ISBN: 978-0-7803-8741-6**

- **TAO ZHENG ET AL: "PMAC: An Adaptive Energy-Efficient MAC Protocol for Wireless Sensor Networks" PARALLEL AND DISTRIBUTED PROCESSING SYMPOSIUM, 2005. PROCEEDINGS. 19TH IEEE INTERNATIONAL DENVER, CO, USA 04-08 APRIL 2005, PISCATAWAY, NJ, USA,IEEE, 4. April 2005 (2005-04-04), Seiten 237a-237a, XP010785829 ISBN: 978-0-7695-2312-5**

**Beschreibung**

Die Erfindung betrifft ein Verfahren zum Austausch von Daten in einem Netzwerk mit einer Gruppe an Knoten, sowie einen dazugehörigen Knoten und ein dazugehöriges Netzwerk.

Weiträumige drahtlose Sensornetzwerke (WSN - Wireless Sensor Networks) werden mittlerweile für unterschiedlichste Applikationen eingesetzt, wie beispielsweise beim Verfolgen von Fracht, in der industriellen Automatisation, bei der Einbruchsüberwachung und in der Medizintechnik. Alle diese Anwendungen haben besondere Anforderungen und Herausforderungen, insbesondere an die verwendete Hardware, die verwendete drahtlose Kommunikationstechnik und an die eingesetzten Protokolle. Hierbei ist von besonderer Bedeutung, dass ein Energieverbrauch zum Betreiben derartiger drahtloser Sensornetze niedrig sein muss.

Ein Standard IEEE 802.15.4 zusammen mit einer Spezifikation ZigBee geben ein Framework für ein standardisiertes energieeffizientes drahtloses Sensornetzwerk an. In dem Standard IEEE 802.15.4 wird durch einen Mode mit einem Namen "Beacon-Enabled" zum Betreiben eines sich zeitlich wiederholenden Ablaufsschemas (auf Englisch: Duty Cycles) ermöglicht. Unter dem Duty Cycle wird eine Strategie zum Einsparen von Energie in autark arbeitenden Knoten in einem drahtlosen Sensornetzwerk verstanden, wobei innerhalb der Duty Cycle Schlaf- und Aktivphasen sich abwechseln. Während der Schlafphase wird eine Sende-Empfangs-Einheit des betrachteten Sensorknotens innerhalb des drahtlosen Sensornetzwerks abgeschaltet, um Energie einzusparen. Eine Übertragung von Daten durch den Sensorknoten findet innerhalb der Aktivphase statt. Unter Übertragung wird hierbei auch das Übermitteln eines Ankündigungsdatenworts zum Ankündigen der Aktivphase verstanden.

Falls die Sensorknoten einen größeren Bereich abdecken sollen, als durch eine jeweilige Empfangs- und Sendeeinheit des jeweiligen Sensorknotens erreichbar ist, so wird ein Mesh Netzwerk geformt, in dem die Sensorknoten zumindest teilweise als Übertragungsknoten (auf Englisch: Relay Node) für Daten von Knoten dienen, die außerhalb der jeweiligen Sende- und Empfangseinheiten liegen. Eine Koordination der Duty Cycles ist nicht einfach, da Übertragungsknoten mit einer Vielzahl von Nachbarknoten im Upstream und im Downstream kommunizieren müssen.

Folgende drei Ansätze sind bekannt, um in einem drahtlosen Sensornetzwerk einen Energieverbrauch einzusparen:

1. Ein "Beacon Based" Ansatz bekannt als S-MAC, siehe [1], oder als Betriebsmodus "Beaconing Mode" im Standard IEEE 802.15.4/ZigBee. MAC-Mechanismen (MAC Medium Access) setzen Energiesparmethoden auf der MAC-Schicht ein, lassen jedoch eine Integration für ein Routing offen. Der Betriebsmodus "Beaconing Mode" des IEEE 802.15.4 wird momentan in keinem ZigBee Profil verwendet. Ferner ist das in ZigBee propagierte "Adress Based Tree Routing" Protokoll aufgrund seiner fehlenden Flexibilität von großem Nachteil.

2. Eine Methode "Low Power Listening" ist aus einer Technologie B-MAC, siehe [2], bekannt. Derartige Protokolle wecken ihre Nachbarknoten durch Senden von langen Präambeln innerhalb einer Aktivierungsphase der aktiven Phase. Die Knoten suchen in wiederholten Zeitabständen derartige Präambeln und bleiben für eine Datenübertragung wach. Diese Protokolle unterstützen ein Routing und eine Datenkommunikation, jedoch hängt ein Energieverbrauch stark von dem Verkehrsaufkommen ab. Derzeit sind keine Implementierungen dieser Verfahren mit langen Präambeln bekannt.

3. Bei TDMA-basierten Verfahren (TDMA - Time Division Multiplex Access), siehe bspw. in [3], wird in einer durchaus effizienten Art und Weise eine paarweise Kommunikation in spezifischen Time- und Frequenzzeitscheiben koordiniert. Diese Koordination und das Routing werden zentral auf einem externen Server durchgeführt. Aufgrund der zentralen Verwaltung ist eine derartige Lösung für dezentrale, sich selbst organisierende und selbst korrigierende drahtlose Sensornetzwerke ungeeignet. Ferner benötigt diese Lösung einen synchronisierten Zeittaktgeber mit einer geringen Drift.

Somit besteht die Aufgabe der vorliegenden Erfindung, ein Verfahren anzugeben, welches für ein sich selbst organisierendes dezentral betriebenes Netzwerk eine hohe Effizienz bezüglich einer Datenübertragung und eines niedrigen Energieverbrauchs zum Betreiben des Netzwerks ermöglicht.

Diese Aufgabe wird gelöst durch die Merkmale der unabhängigen Ansprüche. Weiterbildungen der Erfindung sind in den abhängigen Ansprüchen wiedergegeben.

Die Erfindung betrifft ein Verfahren zum Austausch von Daten in einem Netzwerk, insbesondere in einem Mesh-Netzwerk, mit einer Gruppe an Knoten, bei dem der jeweilige Knoten jeweils mit einem sich zeitlich wiederholenden Ablaufschema betrieben, das Ablaufschema in zeitlicher Abfolge durch eine Aktivphase und gefolgt von einer Schlafphase gebildet, die Aktivphase in zeitlicher Abfolge aus einer Aktivierungsphase zum Mitteilen des Starts der Aktivphase und gefolgt von einer Kommunikationsphase gebildet, und die Kommunikationsphase durch eine Empfangsphase zum lediglich Empfangen von Daten und eine Sende-Empfang-Phase zum Empfangen und Senden von Daten gebildet werden.

Eine Verwendung des Ablaufschemas nach obigem Aufbau hat den Vorteil, dass eine Kollision beim Versenden von Paketen mit Daten dadurch reduziert wird, dass die Aktivphase eine Empfangsphase aufweist, in der lediglich Daten empfangen werden können. Durch die Reduktion von Kollisionen wird der Datendurchsatz erhöht und gleichzeitig ein Energieverbrauch reduziert, da ein wiederholtes Versenden von Daten aufgrund von Kollisionen reduziert wird. In der Aktivierungsphase sendet der jeweilige Knoten eine Ankündigungsdatenwort, mit dem benachbarte Knoten erkennen können, dass sich der Knoten in seiner Aktivphase und nach der Aktivierungsphase in seiner Kommunikationsphase befindet.

Vorzugsweise wird in der Kommunikationsphase die Empfangsphase zeitlich vor der Sende-Empfang-Phase angeordnet. Hierdurch kann eine zeitliche Synchronisation von Knoten vereinfacht werden, da eine Bestimmung einer Zeitdauer, in der ein benachbarter Knoten sich in seiner Empfangsphase befindet dadurch in einfacher Weise bestimmt werden kann, dass die Aktivierungsphase, in der der benachbarte Knoten das Ankündigungsdatenwort aussendet, sich direkt vor der Empfangsphase befindet.

Wird ferner das Ablaufschema der Knoten mit einer konstanten Zeitdauer betrieben, wobei für den Fall, dass für einen der Knoten eine zeitliche Lage seines Ablaufschemas gegenüber einem Ablaufschema eines der anderen Knoten verändert wird, eines der Ablaufschemata dieses Knotens mit einer zu der konstanten Zeitdauer verschiedenen Zeitdauer betrieben wird, so wird eine Synchronisation von Knoten des Netzwerks dadurch vereinfacht, dass ein jeweiliger Knoten die zeitliche Lage von Ablaufschemata von benachbarten Knoten in einfacher und zuverlässiger Weise vorhersagen kann. Hierdurch wird ein Senden von Daten des Knotens an einen anderen Knoten während dessen Schlafphase vermieden. Dies reduziert den Energieverbrauch des Knotens, da ein wiederholtes Versenden von Daten vermieden werden kann.

Ferner wird angemerkt, dass die Knoten zwar die konstante Zeitdauer TA für ihre Ablaufschemata verwenden, jedoch in der Praxis zeitliche Differenzen bei der Implementierung der konstanten Zeitdauer auftreten können. So unterscheiden sich bspw. physikalische Zeitgeber, z.B. realisiert mittels jeweiliger Schwingquarze, der jeweiligen Knoten, so dass dadurch die genannten zeitlichen Differenzen auftreten können. Deshalb wird im Rahmen dieser Erfindung unter konstanter Zeitdauer verstanden, dass die jeweiligen Knoten einen konstanten Wert für die konstante Zeitdauer verwenden, auch wenn es zu zeitlichen Differenzen aufgrund der Implementierung kommen kann.

In einer Erweiterung des Verfahrens werden während der Kommunikationsphase eines ersten Knotens der Gruppe die Aktivierungsphase eines zweiten Knotens der Gruppe erkannt, eine erste Zeitdauer zwischen der Aktivierungsphase des ersten Knotens und der Aktivierungsphase des zweiten Knotens bestimmt, falls die erste Zeitdauer eine minimale Zeitdauer unterschreitet, eine Zeitdauer nur der nächsten Schlafphase des ersten Knotens derart verkürzt, dass eine zweite Zeitdauer zwischen der Aktivierungsphase des ersten Knotens und der Aktivierungsphase des zweiten Knotens in dem jeweiligen direkt nachfolgenden Ablaufschema zumindest die minimale Zeitdauer ist.

Durch diese Erweiterung wird eine zeitliche Lage von Ablaufschemata von zwei Knoten derart angepasst, dass eine Kollision beim Versenden von Daten mittels Pakete reduziert und ggfs. vollständig vermieden werden kann.

Vorzugsweise wird hierbei die minimale Zeitdauer durch Multiplikation eines minimalen Prozentsatzes mit einer Zeitdauer der Aktivphase gebildet. Die Verwendung einer Definition der Zeitdauer mittels des minimalen Prozentsatzes hat den Vorteil, dass ein Wert des minimalen Prozentsatzes fix bleiben kann, auch wenn sich ein absoluten Wert für die Zeitdauer der Aktivphase ändert. Dies vereinfacht zudem die Rechenkomplexität.

In einer alternativen Erweiterung des Verfahrens werden während der Kommunikationsphase eines ersten Knotens der Gruppe die Aktivierungsphase eines zweiten Knotens der Gruppe erkannt, eine erste Zeitdauer zwischen der Aktivierungsphase des ersten Knotens und der Aktivierungsphase des zweiten Knotens bestimmt, falls die erste Zeitdauer eine maximale Zeitdauer überschreitet, eine Zeitdauer nur der nächsten Schlafphase des ersten Knotens derart verlängert, dass eine zweite Zeitdauer zwischen der Aktivierungsphase des ersten Knotens und der Aktivierungsphase des zweiten Knotens in dem jeweils direkt nachfolgenden Ablaufschema maximal die maximale Zeitdauer beträgt.

Durch diese alternative Erweiterung wird eine zeitliche Lage von zwei Knoten derart angepasst, dass eine Kollision beim Versenden von Daten mittels Pakete reduziert und ggfs. vollständig vermieden werden kann.

Vorzugsweise wird hierbei die maximale Zeitdauer aus einem maximalen Prozentsatz einer Zeitspanne der Aktivphase gebildet. Die Verwendung einer Definition der Zeitdauer mittels des maximalen Prozentsatzes hat den Vorteil, dass ein Wert des maximalen Prozentsatzes fix bleiben kann, auch wenn sich ein absoluter Wert für die Zeitdauer der Aktivphase ändert. Dies vereinfacht zudem die Rechenkomplexität.

Bei dieser alternativen Erweiterung kann die Zeitdauer nur der nächsten Schlafphase des ersten Knotens derart verlängert werden, dass die zweite Zeitdauer maximal der Hälfte der maximalen Zeitdauer entspricht. Durch Verwendung der Hälfte der maximalen Zeitdauer wird erreicht, dass Änderungen der Zeitdauer der nächsten Schlafphase nicht zu groß sind, so dass andere Knoten der Gruppe, die die zeitliche Lage ihres Aktivierungsschemas auch an andere Knoten anpassen, leichter ihre Anpassung durchführen können. Somit wird durch diese Vorgehensweise das Ziel erreicht, dass eine Instabilität beim Erstellen der zeitlichen Lagen der Ablaufschemata der Knoten vermieden wird.

Die Erweiterungen können vorzugsweise durch folgende Ergänzung dahingehend erweitert werden, dass während der Kommunikationsphase eines ersten Knotens der Gruppe die jeweilige Aktivierungsphase mehrerer Knoten der Gruppe erkannt werden, eine jeweilige erste Zeitdauer zwischen der Aktivierungsphase des ersten Knotens und der Aktivierungsphase der jeweiligen Knoten ermittelt wird, für die Verfahrenschritte der Erweiterungen des Verfahrens derjenige Knoten als zweiter Knoten verwendet wird, dessen erste Zeitdauer gegenüber den anderen ersten Zeitdauern einen kleinsten Wert aufweist. Hierdurch wird in vorteilhafter Weise erreicht, dass ein Sendezeitpunkt zum Senden von Daten des ersten Knotens an mehrere Knoten derart gewählt wird, dass diese Knoten die Daten während ihrer jeweiligen Kommunikationsphase empfangen können. Somit wird durch diese Ergänzung erreicht, dass eine Wiederholung zum Versenden von Daten reduziert oder vermieden wird.

In einer Erweiterung des Verfahrens wird, falls während der Kommunikationsphase eines ersten Knotens der Gruppe die Aktivierungsphase eines zweiten Knotens der Gruppe nicht erkannt und die Sende-Empfang-Phase des zweiten Knotens detektiert wird, eine Zeitdauer nur der nächsten Schlafphase des ersten Knotens verkürzt. Hierdurch wird eine zeitliche Lage von Ablaufschemata des ersten Knotens gegenüber dem zweiten Knoten derart verändert, dass die Aktivierungsphase des zweiten Knotens in die Kommunikationsphase des ersten Knotens verschoben wird, wodurch der erste Knoten in der Lage ist, die zeitliche Lage beider Knoten exakt zu bestimmen und beim Versenden von Daten zu berücksichtigen. Durch die Verschiebung der zeitlichen Lage wird ein wiederholtes Versenden von Daten aufgrund von Kollisionen oder wegen der Schlafphase des zweiten Knotens, in der er keine Daten empfangen kann, reduziert bzw. vermieden.

Vorzugsweise wird hierbei die Zeitdauer um einen Prozentsatz einer Zeitspanne der Aktivphase reduziert. Die Verwendung einer Definition der Zeitdauer mittels des Prozentsatzes hat den Vorteil, dass ein Wert des Prozentsatzes fix bleiben kann, auch wenn sich ein absoluter Wert für die Zeitdauer der Aktivphase ändert. Dies vereinfacht zudem die Rechenkomplexität.

Ferner kann die Zeitdauer vorzugsweise derart gebildet werden, dass bei dem direkt nachfolgenden Ablaufschema des ersten Knotens die Aktivierungsphase des zweiten Knotens innerhalb der Kommunikationsphase des ersten Knotens ist. Hierdurch wird erreicht, dass eine zeitliche Lage des Ablaufschema eines Knotens genau bestimmbar wird, wodurch ein Senden von Daten derart erfolgen kann, dass Kollisionen vermieden und somit ein Energieverbrauch reduziert werden kann.

In einer optionalen Erweiterung des Verfahrens wird, falls während der Kommunikationsphase eines ersten Knotens der Gruppe kein weiterer Knoten erkannt wird, eine Zeitdauer der nur nächsten Schlafphase des ersten Knotens verlängert. Durch die Verlängerung der Schlafphase des ersten Knotens wird ein Energieverbrauch reduziert. Ferner bleibt eine Effizienz zum Austausch von Daten erhalten, da aufgrund des Fehlens von Nachbarknoten keine Daten von anderen Knoten zu erwarten sind.

Die bisherigen Erweiterungen werden vorzugsweise durch Verkürzen oder Verlängern einer Zeitdauer der Schlafphase durch einen Jitterfaktor variiert. Hierdurch wird vermieden, dass im Falle, dass mehrere Knoten gleichzeitig eine jeweilige Anpassung ihrer zeitlichen Lage zu einem der anderen Knoten durchführen, das Anpassen der jeweiligen Ablaufschemata in einer identischen Art und Weise erfolgt.

Hierbei ist es in der Praxis zweckmäßig, dass der Jitterfaktor aus einem um Null symmetrischen Wertebereich zufällig ausgewählt wird. Hierdurch wird erreicht, dass im Mittel durch Verwendung des Jitters keine Drift entsteht.

In einer vorzugsweisen Erweiterung wird einer der Knoten der Gruppe von einer Änderung einer Zeitdauer seiner Schlafphase gemäß einem vorhergehenden Verfahrenschritte ausgeschlossen. Beispielsweise ist einer der Knoten der Gruppe ein Gateway zu einem weiteren Netzwerk. Dieser Knoten verändert die Zeitdauer seiner Schlafphase nicht. Die übrigen Knoten der Gruppe passen die jeweilige zeitliche Lage ihre Ablaufschemata mittels Variation ihrer Schlafphase gemäß einer der obigen Erweiterungen an einen in ihrer Nachbarschaft liegenden Knoten an. Durch die Erweiterung wird bewirkt, dass nach einer Zeit der Anpassung der jeweiligen zeitlichen Lagen der Knoten die Ablaufschemata der Knoten zeitlich gegeneinander synchronisiert sind und somit ein Datenaustausch in dem Netzwerk mit einer geringen Anzahl an Kollisionen ggfs. auch ohne Kollision durchführbar ist.

Werden für eine Unicast-Kommunikation zum Senden von Daten von einem ersten Knoten der Gruppe zu einem zweiten Knoten der Gruppe die Daten zu Beginn der Sende-Empfang-Phase des ersten Knotens verschickt, falls die Aktivierungsphase des zweiten Knotens innerhalb der Schlafphase des ersten Knotens liegt, so ist eine Wahrscheinlichkeit groß, dass der zweite Knoten die versendeten Daten innerhalb seiner Kommunikationsphase empfangen kann.

Werden für eine Broadcast-Kommunikation zum Senden von Daten von einem ersten Knoten der Gruppe zu mehreren weiteren Knoten der Gruppe die Daten dann geschickt, wenn sich die weiteren Knoten in ihrer jeweiligen Kommunikationsphase befinden, falls zumindest zwei der weiteren Knoten ihre jeweilige Aktivierungsphase innerhalb der Kommunikationsphase des ersten Knotens haben, so kann ein Empfang der Daten durch mehrere Knoten ermöglicht werden.

Hierbei ist es ferner zweckmäßig, falls eine Zeitdauer, in der sich die zumindest zwei der weiteren Knoten in ihrer Kommunikationsphase befinden, eine minimale Aktivierungszeitdauer unterschreitet, ein Zeitpunkt zum Versenden der Daten um eine vorgebbare Zeitdauer zeitlich vorzuschieben, da hierdurch eine Wahrscheinlichkeit eines Empfangs der Daten erhöht wird.

Vorzugsweise werden für eine Broadcast-Kommunikation zum Senden von Daten von einem ersten Knoten der Gruppe zu mehreren weiteren Knoten der Gruppe die Daten zu Beginn der Sende-Empfang-Phase des ersten Knotens verschickt, falls die Aktivierungsphasen aller weiteren Knoten während der Kommunikationsphase des ersten Knotens nicht erkannt werden. Hierdurch wird für Knoten, deren zeitliche Lage ihres jeweiligen Ablaufschemas durch den ersten Knoten nicht genau bestimmbar ist, da deren Aktivierungsphase innerhalb der Schlafphase des ersten Knoten liegt, eine Wahrscheinlichkeit für ein Übersenden von Daten und ein Empfangen dieser Daten erhöht. Hierdurch wird eine Wiederholungsrate reduziert, wodurch ein Energieverbrauch auch reduziert wird.

Ein Teil der Erfindung ist auch ein Knoten zum Austausch von Daten in einem Netzwerk, insbesondere in einem Mesh-Netzwerk, mit einer Gruppe an Knoten, wobei der Knoten zumindest ein Mittel aufweist, das derart ausgebildet ist, dass ein Verfahren nach einem der vorangehenden Schritte ausführbar ist. Hierdurch sind die Verfahrenschritte in dem Knoten implementier- und ausführbar. Die Vorteile des Verfahrens gelten auch für den Knoten.

Schließlich ist ein Netzwerk, insbesondere ein Mesh-Netzwerk, zum Austausch von Daten mit einer Gruppe an Knoten, Teil der Erfindung, wobei zumindest zwei der Knoten der Gruppe jeweils Mittel aufweisen, die zum Durchführen eines Verfahrens nach einem der vorangehenden Schritte ausgestaltet sind. Die Vorteile des Verfahrens gelten auch für das Netzwerk.

Die Erfindung zeichnet sich ferner dadurch aus, dass durch Verwendung von einer festen Zeitdauer der Ablaufschemata der Energieverbrauch zum Datenaustausch im Netzwerk vorhersagbar ist. Die Erfindung ist auch vorteilhaft, da diese mit heute verfügbarer Hardware realisierbar sind. Weiterhin können auch das AODV-Routing Verfahren (AODV - Ad-Hoc On-Demand Distance Vector) und das ZigBee Meshprotokoll eingesetzt werden. Ferner ist die Erfindung verwendbar für unabhängig voneinander arbeitende Knoten im Netzwerk, da keine zentrale Koordination benötigt wird. Hierdurch ergibt sich, dass Änderungen in der Netzwerktopologie, bspw. durch Ausfallen oder Hinzutreten von Knoten oder aufgrund von Übertragungsstörungen im Netzwerk, durch die Erfindung unterstützt werden, so dass ein robustes Netzwerk gegenüber diesen Änderungen entsteht. Es zeigt sich auch, dass ein signifikanter höherer Datendurchsatz durch die geschilderten Vorgehensweisen der Erfindung erzielbar sind, als bei einem Verfahren, bei dem die Ablaufschemata aller Knoten derart synchronisiert sind, dass die jeweiligen Aktivierungsphasen zeitgleich stattfinden. Der höhere Datendurchsatz ergibt sich, weil mit dem Verfahren der Erfindung auch eine nur teilweise Überlappung der Kommunikationsphasen erreichbar ist, wodurch innerhalb des Netzwerks der Austausch von Daten während der gesamten konstanten Zeitdauer des Ablaufschemas stattfinden kann.

Die Erfindung und Weiterbildungen werden anhand der nachfolgenden Zeichnungen näher erläutert. Im Einzelnen zeigen:

Figur 1    ein Netzwerk mit drei drahtlosen Knoten;

Figur 2    ein Aufbau eines Rahmens eines Ablaufschemas;

Figur 3    zeitliche Anordnung eines ersten Knotens und eines Nachfolgerknotens, wobei der Nachfolgerknoten eine minimale Zeitdauer zu dem ersten Knoten unter- schreitet;

Figur 4    zeitliche Anordnung eines ersten Knotens und eines Vorgängerknotens;

Figur 5    Flussdiagramm zum Bestimmen eines Zeitkorrekturfak- tors;

Figur 6    zeitliche Anordnung eines ersten Knotens und eines Nachfolgerknotens, wobei der Nachfolgerknoten eine maximale Zeitdauer zu dem ersten Knoten überschrei- tet;

Figur 7    Vergleich einer Zustellrate des Verfahrens mit ei- nem bekannten Verfahren;

Figur 8    Knoten mit einem Mittel zum Durchführen des Verfah- rens.

Elemente mit gleicher Funktion und Wirkungsweise sind in den Figuren mit denselben Bezugszeichen versehen.

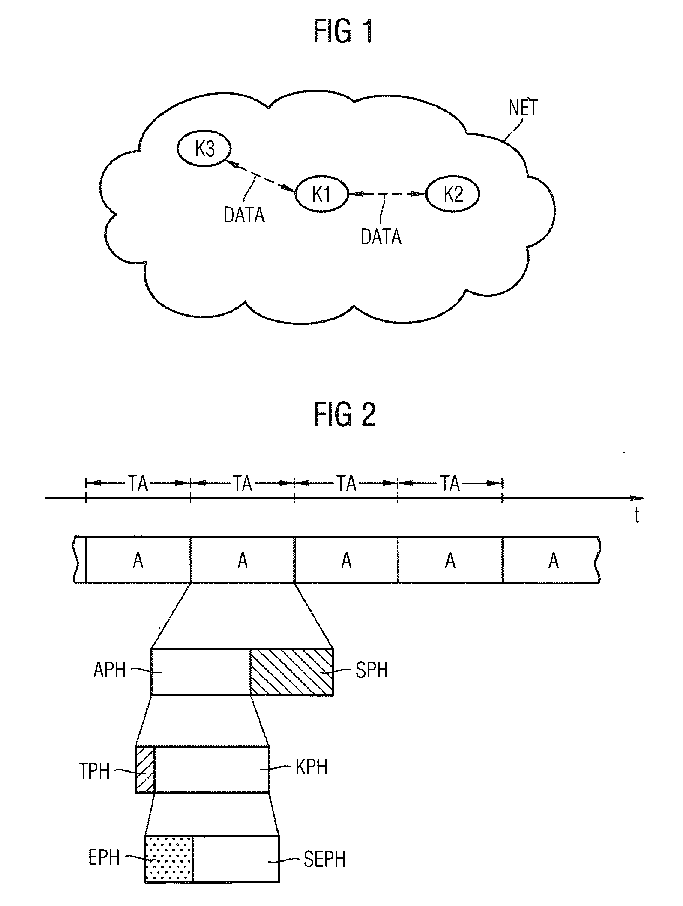

Figur 1 zeigt ein Netzwerk NET, in Form eines drahtlosen Mesh-Netzwerks, mit einer Gruppe von Knoten K1, K2, K3. Die Knoten werden auch erster Knoten K1, zweiter Knoten K2 und dritter Knoten K3 bezeichnet. Wie Figur 1 entnehmbar ist, liegt der erste Knoten K1 örtlich zwischen dem zweiten Knoten K2 und dem dritten Knoten K3. Da die Knoten K2 und K3 für einen direkten Austausch von Daten DATA zu weit entfernt sind, fungiert der erste Knoten K1 als Übermittlungsknoten (in englisch: Relay Node), um Daten des dritten Knotens K3 zu empfangen und an den zweiten Knoten K2 weiterzuleiten und umgekehrt. Das vorliegende Netzwerk ist beispielsweise ein drahtloses Sensornetzwerk WSN (WSN - Wireless Sensor Network).

Die jeweiligen Knoten werden mit einem sich jeweils zeitlich wiederholenden Ablaufschema A betrieben. Figur 2 zeigt das Ablaufschema, welches mehrere Phasen aufweist, über einer Zeitachse t. Das jeweilige Ablaufschema A teilt sich in eine Aktivphase APH und eine Schlafphase SPH. Während der Aktivphase ist der jeweilige Knoten aktiv und kann beispielsweise Daten senden und/oder empfangen. In der Schlafphase ist der jeweilige Knoten inaktiv, wobei während der Schlafphase durch Abschalten von Funktionen des jeweiligen Knotens der Energieverbrauch des Knotens reduziert und somit insgesamt der Energieverbrauch zum Betreiben des Knotens verringert wird. Die Schlafphase SPH folgt zeitlich nach der Aktivphase APH.

Die Aktivphase selbst unterteilt sich in eine Aktivierungsphase TPH und eine Kommunikationsphase KPH, wobei die Kommunikationsphase zeitlich nach der Aktivierungsphase durchgeführt wird. Während der Aktivierungsphase TPH schickt der jeweilige Knoten ein Ankündigungsdatenwort, um anderen Knoten im Netzwerk mitzuteilen, dass er im Folgenden in die Kommunikationsphase zum Austausch von Daten eintritt. Die Kommunikationsphase selbst umfasst eine Empfangsphase EPH, die lediglich zum Empfangen von Daten ausgebildet ist, und eine Sende-Empfang-Phase SEPH, in der Daten sowohl empfangen als auch gesendet werden können. Die Empfangsphase EPH ist vorzugsweise zeitlich der Sende-Empfangs-Phase SEPH vorangestellt. In einer alternativen Ausführungsform beginnt die Kommunikationsphase zunächst mit der Durchführung der Sende-Empfangs-Phase gefolgt von der Empfangsphase.

Jeder der Knoten K1, K2, K3 wird in den gemäß Figur 2 beschriebenen Phasen des jeweiligen Ablaufschemas betrieben, wobei das Ablaufschema mit einer konstanten Zeitdauer TA betrieben werden, bspw. TA = 10 Sekunden. Die konstante Zeitdauer wird nicht in dem Fall eingehalten, in dem einer der Knoten K1 der Gruppe eine zeitliche Lage seines Ablaufschemas gegenüber einem Ablaufschema eines der anderen Knoten K2 der Gruppe verändert. Unter der zeitlichen Lage ist hierbei eine Zeitdauer zwischen der Aktivierungsphase des Knoten und der Aktivierungsphase des anderen Knotens der Gruppe zu verstehen. Nachfolgend werden einige Ausführungsformen erläutert, bei denen die zeitliche Lage durch ein Verkürzen oder Verlängern der Schlafphase des Knotens K1 verändert wird. Ferner wird angemerkt, dass die Knoten zwar die konstante Zeitdauer TA für ihre Ablaufschemata verwenden, jedoch in der Praxis zeitliche Differenzen bei der Implementierung der konstanten Zeitdauer auftreten können. So unterscheiden sich bspw. physikalische Zeitgeber, z.B. realisiert mittels jeweiliger Schwingquarze, der jeweiligen Knoten, so dass dadurch die genannten zeitlichen Differenzen auftreten können. Deshalb wird im Rahmen dieser Erfindung unter konstanter Zeitdauer verstanden, dass die jeweiligen Knoten einen konstanten Wert für die konstante Zeitdauer verwenden, auch wenn es zu zeitlichen Differenzen aufgrund der Implementierung kommen kann.

Die Knoten des Netzwerks durchlaufen normalerweise das Ablaufschema unabhängig voneinander. Um eine Synchronisierung der einzelnen Knoten dahingehend zu erreichen, dass diese Daten austauschen können ohne den Datenaustausch zu sehr durch Kollisionen zu reduzieren oder ein Versenden von Daten während der Schlafphase eines Knotens, in der der jeweilige Knoten keine Daten empfangen kann, stattfinden zu lassen, durchläuft zumindest einer der Knoten, z.B. der erste Knoten K1, eine Anpassung der zeitlichen Lage seines Ablaufschemas zu einem Ablaufschema eines anderen Knotens der Gruppe.

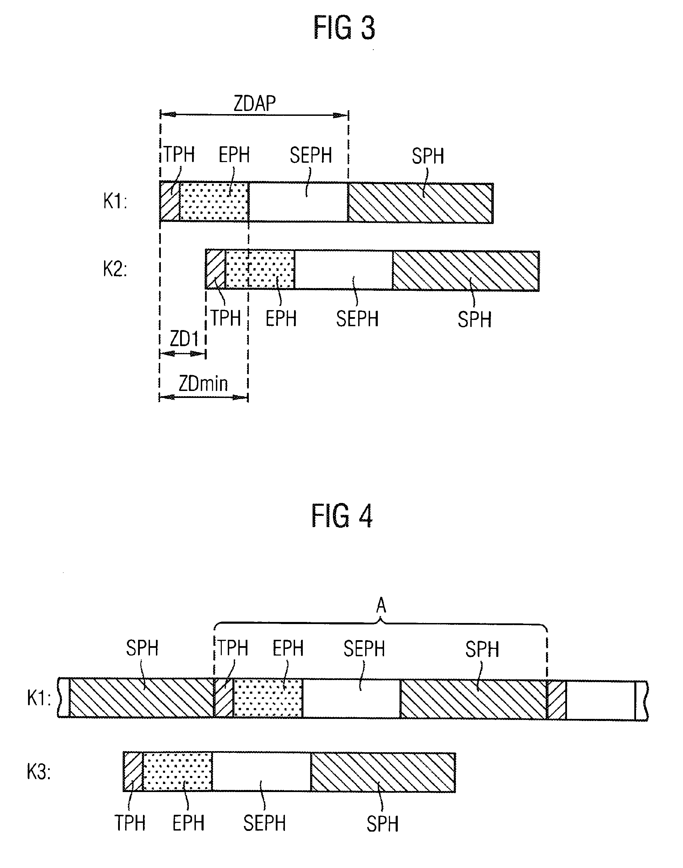

Zunächst horcht der erste Knoten K1 während seiner Kommunikationsphase, ob er zumindest einen Vorgängerknoten oder Nachfolgerknoten in seiner Nachbarschaft erkennen kann. Ein Vorgängerknoten ist dadurch definiert, dass der Vorgängerknoten seine Aktivierungsphase während der Kommunikationsphase des ersten Knotens hat. In Figur 3 ist dies exemplarisch dargestellt, wobei der zweite Knoten K2 während der Empfangsphase des Knoten 1 seine Aktivierungsphase hat. Somit ist der zweite Knoten K2 ein Nachfolgerknoten. Dagegen ist der Vorgängerknoten dadurch charakterisiert, dass die Startphase des Vorgängerknotens in die Schlafphase des ersten Knotens fällt. In Figur 4 ist dies graphisch abgebildet. Hierdurch ergibt sich, dass der erste Knoten den Beginn der Kommunikationsphase des Vorgängerknotens nicht genau bestimmen kann, da der erste Knoten während seiner Schlafphase keine Daten empfangen kann, also auch nicht Aktivierungsdatenwörter, die während der Aktivierungsphase von dem Vorgängerknoten ausgesendet wird. So erkennt der erste Knoten den Vorgängerknoten in der Praxis dadurch, dass er zum einen während der Kommunikationsphase KPH des ersten Knotens Daten, die der Vorgängerknoten während seiner Sende-Empfang-Phase verschickt, empfängt und zum anderen er die Aktivierungsphase des Vorgängerknotens nicht detektieren kann.

Die in der Nachbarschaft des ersten Knotens detektierten Vorgänger- und/oder Nachfolgerknoten werden in einer Nachbarschaftsliste abgespeichert. Die Nachbarschaftsliste enthält für die Vorgängerknoten eine Knotenkennung des Vorgängerknotens, beispielsweise K2, und eine erste Zeitdauer ZD1. Die erste Zeitdauer ZD1 gibt die Zeitspanne zwischen der Aktivierungsphase des ersten Knotens und der Aktivierungsphase des Nachfolgerknotens an, im Beispiel in Figur 3 zwischen dem ersten und dem zweiten Knoten K1, K2. Für einen Vorgängerknoten wird lediglich die Knotenkennung des Vorgängerknotens, beispielsweise K3 gemäß Figur 4, in der Nachbarschaftsliste abgelegt. Somit umfasst diese Nachbarschaftsliste eine Klassifikation der in der Nachbarschaft des ersten Knotens erkannten Nachbarknoten als Vorgänger- und Nachfolgerknoten.

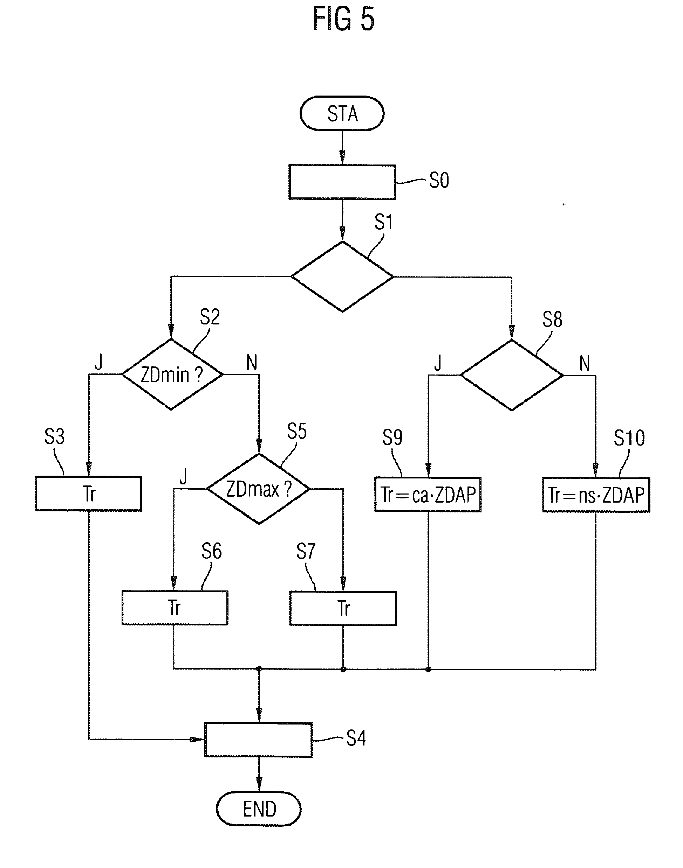

Anhand von Figur 5 wird nachfolgend erläutert, wie die Informationen bzgl. der Vorgänger- und Nachfolgerknoten ausgewertet werden, um eine Verbesserung der Kommunikation zwischen dem ersten Knoten und einem weiteren Knoten der Gruppe zu erreichen. Die erzielbare Verbesserung ist darin zu sehen, dass zum einem ein gleichzeitiges Senden von Daten von benachbarten Knoten reduziert und somit eine Kollisionsrate vermindert wird. Zum anderen kann vermieden werden, dass Daten an einen Nachbarknoten zu einem Zeitpunkt geschickt werden, an dem sich der Nachbarknoten in einer Schlafphase befindet und somit Daten durch den Nachbarknoten nicht empfangen werden können. Folgende Schritte werden im Flussdiagramm nach Figur 5 durchlaufen:

Schritt STA:

Hierbei wird das Ablaufdiagramm gemäß Figur 5 gestartet.

Schritt S0:

In diesem Schritt wird die Umgebung des ersten Knotens K1 nach Vorgänger- und Nachfolgerknoten untersucht und die Nachbarschaftsliste erstellt. Als nächstes wird ein Schritt S1 durchlaufen.

Schritt S1:

Im Schritt S1 wird untersucht, ob sich in der Nachbarschaftsliste, das heißt in der Umgebung des ersten Knotens, ein Nachfolgerknoten befindet. Ist dies der Fall, so wird das Ablaufdiagramm im Schritt S2 fortgesetzt, ansonsten im Schritt S8.

Schritt S2:

Im Schritt S2 wird derjenige Nachfolgerknoten aus der Nachbarschaftsliste ausgewählt, der unter allen Nachfolgerknoten die kürzeste erste Zeitdauer ZD1 aufweist. Die erste Zeitdauer ZD1 gibt dabei die Zeitspanne zwischen den jeweiligen Aktivierungsphasen des ersten Knotens und des ausgewählten Nachfolgerknotens an. Im Folgenden ist dieser ausgewählte Nachfolgerknoten gleich der zweite Knoten.
Es weiterhin untersucht, ob die erste Zeitdauer ZD1, eine minimale Zeitspanne ZDmin unterschreitet. Ist dies der Fall, so wird als nächstes ein Schritt S3 durchlaufen, ansonsten ein Schritt S5.

Schritt S3:

Im Schritt S3 wird eine Zeitdauer für die als nächstes auszuführende Schlafphase des ersten Knotens verkürzt. Hierbei wird diese Verkürzung derart durchgeführt, dass nach Durchlaufen des aktuellen Ablaufschemas des ersten Knotens im direkt nachfolgenden Ablaufschema des ersten Knotens eine zweite Zeitdauer ZD2 zwischen der jeweiligen Aktivierungsphase des ersten Knotens und der Aktivierungsphase des Nachfolgerknotens, das heißt des zweiten Knotens, zumindest die minimale Zeitdauer ZDmin aufweist.
Dazu wird ein additiver Zeitkorrekturfaktor Tr ermittelt, welcher lediglich der nächsten auszuführenden Schlafphase des ersten Knotens additiv hinzugefügt wird. Im vorliegenden Schritt S3 wird zunächst die minimale Zeitdauer ZDmin durch Multiplikation eines minimalen Prozentsatzes PZmin mit einer Zeitdauer ZDAP der Aktivphase APH gebildet. Der minimale Prozentsatz PZmin ist ein Wert zwischen 0 und 1, bspw. 10%. Hieraus ergibt sich die minimale Zeitspanne zu

$$ZDmin = PZmin * ZDAP = 0,1 \cdot ZDAP.$$

Damit kann der Zeitkorrekturfaktor Tr errechnet werden zu

$$Tr = - (ZDmin - ZD1).$$

der Zeitkorrekturfaktor ist negativ, da die nächste Schlafphase verkürzt werden soll. In einer alternativen Ausführungsform wird die minimale Zeitdauer ZDmin derart bestimmt, dass diese einer Zeitdauer der Aktivierungsphase und der Empfangsphase entspricht. Durch den Zeitkorrekturfaktor wird erreicht, dass der erste Knoten K1 und der Nachfolgerknoten K2 zeitlich in ihren Ablaufschemata derart verschoben werden, dass zumindest am Anfang der Sende-Empfangs-Phase des ersten Knotens, die Empfangsphase des Nachfolgerknotens zu liegen kommt. Hierdurch werden Kollisionen vermieden, da, falls der erste Knoten Daten am Anfang seiner Sende-Empfang-Phase verschickt, der Nachfolgerknoten lediglich Daten während seiner Empfangsphase empfangen kann. Nach Ermittlung des Zeitkorrekturfaktors wird das Flussdiagramm im Schritt S4 fortgesetzt.

Schritt S4:

Im Schritt S4 wird eine Zeitdauer ZP' nur der nächsten Schlafphase des ersten Knotens derart ermittelt, dass diese Zeitdauer ZP' aus der sonst üblichen Zeitdauer ZP der Schlafphase des ersten Knotens plus dem Zeitkorrekturfaktor Tr gebildet wird, d.h.

$$ZP' = ZP + Tr.$$

Hierdurch verändert sich auch die Zeitdauer des aktuellen Ablaufschemas des ersten Knoten um Tr. Nach Durchlauf der nächsten Schlafphase des ersten Knotens wird die Schlafphase des ersten Knotens auf die sonst übliche Zeitdauer ZP zurückgesetzt. Nachfolgend wird ein Schritt END durchlaufen.

Schritt S5:

Im Schritt S5 wird überprüft, ob die erste Zeitdauer ZD1 eine maximale Zeitdauer ZDmax überschreitet. Ist dies der Fall, so wird das Ablaufdiagramm im Schritt S6 fortgesetzt, ansonsten im Schritt S7.

Schritt S6:

Im Schritt S6 wird der Zeitkorrekturfaktor Tr derart eingestellt, dass eine Zeitdauer nur der nächsten Schlafphase des ersten Knotens derart verlängert wird, dass eine zweite Zeitdauer ZD2 zwischen der jeweiligen Aktivierungsphase des ersten Knotens und des Nachfolgerknotens K2 in dem nachfolgenden Ablaufschema maximal der maximale Zeitdauer ZDmax beträgt.
Die maximale Zeitdauer ZDmax wird aus einem maximalen Prozentsatz PZmax, zum Beispiel PZmax = 50%, durch Multiplikation mit der Zeitdauer ZDAP der Aktivphase gebildet. So wird er Zeitkorrekturfaktor Tr folgendermaßen gebildet als

$$Tr = (ZD1 - ZDmax) / 2 = (ZD1 - Pzmax*ZDAP) / 2.$$

Hierbei wird der Term (ZD1 - ZDmax) mit einem Faktor 0,5 multipliziert, so dass ZD2 auf jeden Fall kleiner gleich ZDmax betragen wird. Alternativ dazu kann der Zeitkorrekturfaktor Tr auch derart berechnet werden, dass die zweite Zeitdauer ZD2 exakt der maximalen Zeitdauer ZDmax entspricht.

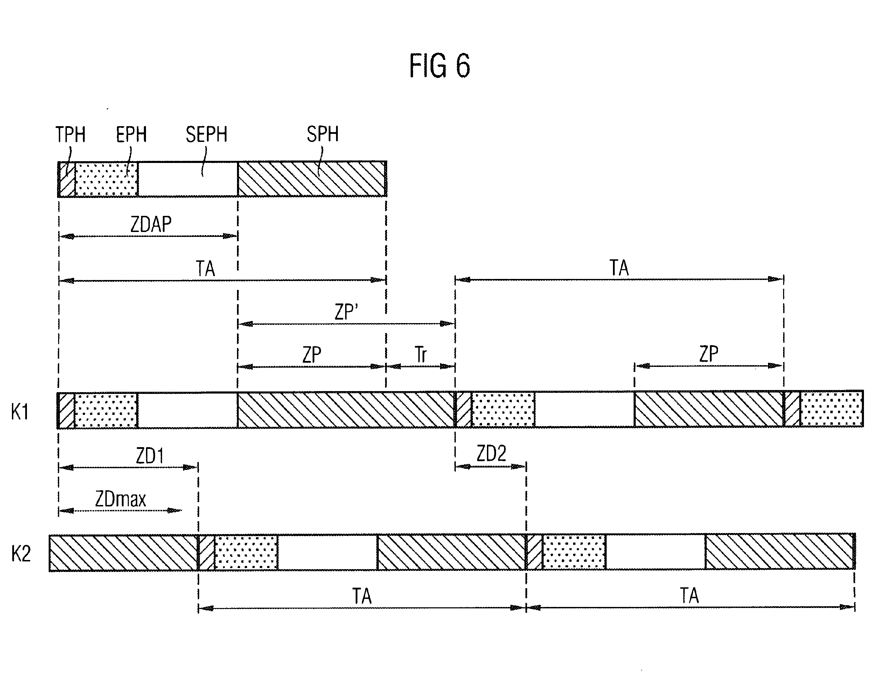

In Figur 6 ist die Vorgehensweise des Schritts S6 graphisch dargestellt. In dem oberen Teil der Figur 6 ist das Ablaufschema A mit der konstanten Zeitdauer TA abgebildet. Zum besseren Unterscheiden der Grenzen des Ablaufschemas sind diese Grenzen mit dicken Linien hervorgehoben. Im unteren Teil der Figur 6 ist der zweite Knoten K2 ein Nachfolgerknoten, wobei die erste Zeitdauer ZD1 > ZDmax ist. Es wird der Zeitkorrekturfaktor Tr additiv der nächsten Schlafphase SPH des ersten Knotens K1 hinzugefügt. Hieraus ergibt sich, dass die zweite Zeitdauer ZD2 kleiner als die erste Zeitdauer ZD1 wird. Die Zeitdauer der Schlafphase im direkt nächsten Ablaufschema des Knotens K1 entspricht dann wieder seinem ursprünglichen Wert, d.h. das direkt nächste Ablaufschema hat wieder die konstante Zeitdauer TA.
Nach Schritt S6 wird mit Schritt S4 fortgesetzt.

Schritt S7:

Hierbei wird der Zeitkorrekturfaktor Tr zu Null gesetzt Tr=0, da die erste Zeitdauer weder die minimale Zeitdauer ZDmin unterschreitet noch die maximale Zeitdauer ZDmax überschreitet. In diesem Fall findet keine Korrektur der nächsten Schlafphase des ersten Knotens statt.

Schritt S8:

Im Schritt S8 wird überprüft, ob die Nachbarschaftsliste zumindest einen Vorgängerknoten aufweist. Ist dies der Fall, so wird ein Schritt S9 durchlaufen ansonsten ein Schritt S10.

Schritt S9:

In diesem Schritt soll sich die zeitliche Lage des Ablaufschemas des ersten Knotens K1 an die des Ablaufschemas des Vorgängerknotens K3 anpassen. Da jedoch dem ersten Knoten nicht bekannt ist, zu welchem Zeitpunkt die Aktivierungsphase des Vorgängerknotens durchgeführt wird, kann lediglich versucht werden die nachfolgende Schlafphase des ersten Knotens zu verkürzen, um so die Ablaufschemata des ersten Knotens und des Vorgängerknotens derart zeitlich zu verschieben, dass die Aktivierungsphase des Vorgängerknotens in der Kommunikationsphase des ersten Knotens zu erliegen kommt. Somit würde der Vorgängerknoten zu einem Nachfolgerknoten werden.

Dazu wird die nächste Schlafphase des ersten Knotens um ca* ZDAP, das heißt um einen Anteil der Zeitdauer der Aktivphase, reduziert. Der Faktor ca liegt zwischen 0 und 1 und wird in diesem Beispiel zu ca = 0,1 gewählt. Der Zeitkorrekturfaktor ergibt sich damit zu Tr = - (ca * ZDAP). Als nächstes wird der Schritt S4 durchgeführt.

Schritt 10:

Der Schritt S10 wird erreicht, falls die Nachbarschaftsliste weder einen Vorgängerknoten noch einen Nachfolgerknoten aufweist. Das bedeutet, dass der erste Knoten keinen Nachbarschaftsknoten entdeckt hat. Hierbei ist es sinnvoll, die nächste Schlafphase des ersten Knotens um einen großen Zeitwert zu verlängern, um damit Energie zum Betreiben der Kommunikationsphase einzusparen. So kann der Zeitkorrekturfaktor Tr zu

$$Tr = ns \cdot ZSA$$

mit ns zwischen 0 und 1, beispielsweise ns = 0,5 gewählt werden. Hiermit wird die nächste Schlafphase des ersten Knotens verlängert. Dieser Schritt S10 wird mit dem Schritt S4 fortgesetzt.

Schritt END:

Im Schritt END wird das Ablaufdiagramm beendet.

In einer Weiterbildung der Erfindung kann der Zeitkorrekturfaktor mit einem Jitterfaktor JF verknüpft werden, so dass ein neuer Zeitkorrekturfaktor Tr'=Tr*JF, wobei der Jitterfaktor JF in einem Wertebereich $[-ji \leq JF \leq ji]$ variieren werden kann. Dieser neue Zeitkorrekturfaktor Tr' wird dann anstelle des Zeitkorrekturfaktors Tr zum Verlängern bzw. Verkürzen der Schlafphase eingesetzt. Das Jittern sollte derart durchgeführt werden, dass der Jitterfaktor JF durch eine gleichförmig verteilte Jitterfunktion zufällig ausgewählt wird. In Versuchen hat sich als maximaler Wert ji für den Jitterfaktor JF mit ji = 0,2 als sinnvoll gezeigt. Durch das Anwenden des Jitterns wird vermieden, dass benachbarte Knoten die exakten Adaptionsschritte zum Anpassen ihrer jeweiligen nächsten Schlafphase durchführen und dadurch zwischen den Ablaufschemata benachbarter Knoten keine zeitliche Verschiebung stattfindet.

Nach dem Durchführen der Anpassungsphase, das heißt dem Verschieben der Ablaufschemata des ersten Knotens im Bezug auf ein Ablaufschema eines benachbarten Knotens, kann die Nachbarschaftsliste neu erstellt oder aktualisiert werden, so dass diese eine aktuelle zeitliche Zuordnung der Ablaufschemata der Knoten des Netzwerks aus Sicht des ersten Knotens wiedergibt. Ferner kann ein Knoten aus der Nachbarschaftsliste gelöscht werden, falls für diesen innerhalb eines vorgebbaren Zeitraums entweder keine Daten oder keine Aktivierungsphase erkannt worden ist. Da Daten eines Vorgängerknoten weniger häufig empfangen werden als Daten und ein Ankündigungsdatenworts der Aktivierungsphase eines Nachfolgerknotens ist es in der Praxis zweckmäßig den jeweiligen vorgebbaren Zeitraum, bis der jeweilige Knoten aus der Nachbarschaftsliste gelöscht werden soll, für die Vorgängerknoten größer als für die Nachfolgerknoten auszulegen, bspw. doppelt so groß.

In einer nach der Anpassungsphase durchzuführenden Kommunikationsphase sollen Daten zwischen den Knoten übertragen werden. Hierbei sind als Übertragungsstrategien eine Unicast- und eine Broadcast-Kommunikation zu unterscheiden.

Bei einer Unicast-Kommunikation werden Daten lediglich von einem zu einem anderen Knoten, das heißt Punkt-zu-Punkt, übertragen. Hierbei ist es vorteilhaft, wenn der sendende Knoten die Daten genau zu dem Zeitpunkt sendet nachdem der empfangene Nachbarknoten gerade seine Aktivierungsphase abgeschlossen hat. Falls der Nachbarknoten ein Vorgängerknoten ist sollten die Daten gleich zu Beginn der Sende-Empfang-Phase des sendenden Knotens verschickt werden, weil dadurch die Wahrscheinlichkeit sehr hoch ist, dass der Vorgängerknoten sich in seiner Kommunikationsphase befindet und somit bereit ist Daten zu empfangen.

Bei einer Broadcast-Kommunikation werden Daten von einem Knoten an zwei oder mehrere Nachbarknoten übertragen. Falls der sendende Knoten K1 mehrere Nachfolgerknoten K2, K3 aufweist, sollten die Daten zu einem Zeitpunkt geschickt werden, an dem alle Nachfolgerknoten sich in ihrer jeweiligen Kommunikationsphase befinden.

Sollte hingegen die Zeitdauer, in der alle Nachfolgerknoten in ihrer Kommunikationsphase sind, kleiner als ein Anteil der Zeitdauer ZDAP Aktivphase des sendenden Knotens sein, bspw. kleiner 10% * ZDAP, so sollten die Daten früher übertragen werden, damit mehrere Nachfolgeknoten die übertragenen Daten noch erhalten können. Falls der sendende Knoten keine Nachfolgerknoten hat, so sollte der sendende Knoten die Daten in der Broadcast-Kommunikation gleich zu Beginn seiner Sende-Empfang-Phase schicken.

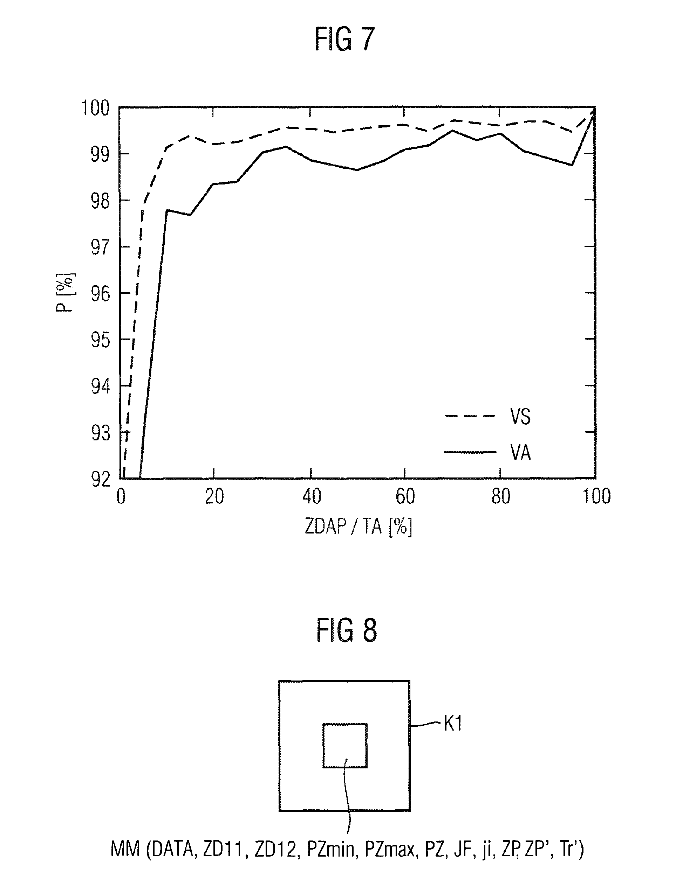

In Figur 7 ist ein Vergleich zwischen einem bekanntem Verfahren VS und dem in dieser Beschreibung vorgestellten Verfahren VS zu sehen. Bei dem bekannten Verfahren VS sind die Ablaufschemata der betrachteten Knoten derart zu einander synchronisiert, dass die jeweilige erste Zeitdauer ZD1, also die Zeitspanne zwischen den Aktivierungsphasen der Ablaufschemata der jeweiligen Knoten ist gleich Null. Bei der Simulation gemäß Figur 7 wurde das bekannte Verfahren VS als idealisiert angenommen. In einem realen System würde zur Durchführung einer Synchronisation gemäß dem bekannten Verfahren ein erheblicher Aufwand bzgl. der Komplexität entstehen.

Die Figur 7 zeigt auf ihrer Abszisse eine Rate der Zeitdauer ZDAP der Aktivphase zu der konstanten Zeitdauer TA des Ablaufschemas. Die Rate 100% gibt somit an, dass die Zeitdauer der Aktivphase gleich der konstanten Zeitdauer ist, wobei eine Zeitdauer ZP der Schlafphase ZP=0 ist. Auf der Ordinate der Figur 7 ist eine Zustellrate von Paketen mit Daten abgebildet, wobei die Zustellrate durch Eins minus einer Verlustrate der Pakete mit Daten erzeugt wird. Die Verlustrate tritt bspw. aufgrund von Kollisionen auf.

Der Figur 7 ist zu entnehmen, dass die Zustellrate des Verfahrens VA nur geringfügig unter der Zustellrate des bekannten Verfahrens VS liegt. Zudem geht aus der Figur 7 hervor, dass die Zustellrate des Verfahrens VA bei zunehmendem ZDAP/TA der Zustellrate des Verfahrens VS annähert.

In Figur 7 wurden für das Verfahren VA folgende Parameter verwendet:

- TA= 1 s (Sekunde)
- Aktivierungsphase TPH hat eine Zeitdauer von 2 ms
- Empfangsphase EPH hat eine Zeitdauer, die sich errechnet zu: 0,1*ZDAP - Zeitdauer der TPH, wobei die Zeitdauer ZDAP der Aktivphase gemäß Figur 7 variiert wird;
- Zeitdauer der ZDmin = 0,1 * ZDAP
- Zeitdauer der ZDmax = 0,5 * ZDAP

Die Erfindung betrifft auch einen Knoten K1 zum Austausch von Daten in dem Netzwerk NET aus einer Gruppe an Knoten K1, K2, K3, das zumindest ein Mittel MM aufweist, das derart ausgebildet ist, dass das Verfahren ausführbar ist. Das Mittel MM ist in Software, Hardware und/oder aus einer Kombination aus Software und Hardware implementier- und ausführbar. Das Mittel MM kann ein oder mehrere Teilmittel aufweisen, die einzelne Verfahrenschritte des Verfahrens ausführen können.

Zudem umfasst die Erfindung das Netzwerk, insbesondere ein Mesh-Netzwerk, zum Austausch von Daten mit der Gruppe an Knoten K1, K2, K3, wobei zumindest zwei der Knoten K1, K2 der Gruppe jeweils Mittel MM aufweisen, die zum Durchführen eines Verfahrens nach einem der obigen Verfahrenschritte ausgestaltet sind.

Die Erfindung kann in einem drahtlosen Sensornetzwerk (WSN - Wireless Sensor Networks) verwendet werden.

Literatur:

[1] W. Ye et al., "An Energy-Efficient MAC Protocol for Wireless Sensor Networks", Proceedings of the 21st International Annual Joint Conference of the IEEE Computer and Communications Societies (INFOCOM 2002), New York, NY, USA, Juni 2002

[2] J Polastre et al., "Versatile Low Power Media Access for Wireless Sensor Networks", Proceedings of the Second ACM Conference on Embedded Networked Sensor Systems (Sen-Sys'04), 3-5 November 2004

[3] "Technical Overview of Time Synchronized Mesh Protocol (TSMP)", DustNetworks, White Paper:http://www.dustnetworks.com/docs/TSMP whitepaper.pdf

**Patentansprüche**

1. Verfahren zum Austausch von Daten (DATA) in einem Netzwerk (NET), insbesondere in einem Mesh-Netzwerk, mit einer Gruppe an Knoten (K1, K2, K3), bei dem
der jeweilige Knoten (K1) jeweils mit einem sich zeitlich wiederholenden Ablaufschema (A) betrieben wird,

das Ablaufschema (A) in zeitlicher Abfolge durch eine Aktivphase (APH) und gefolgt von einer Schlafphase (SPH) gebildet wird,

die Aktivphase (APH) in zeitlicher Abfolge aus einer Aktivierungsphase (TPH) zum Mitteilen des Starts der Aktivphase (APH) und gefolgt von einer Kommunikationsphase (KPH) gebildet wird,

die Kommunikationsphase (KPH) durch eine Empfangsphase (EPH) zum lediglich Empfangen von Daten (DATA) und eine Sende-Empfang-Phase (SEPH) zum Empfangen und Senden von Daten (DATA) gebildet wird.

2. Verfahren nach Anspruch 1
**dadurch gekennzeichnet, dass**
in der Kommunikationsphase (KPH) die Empfangsphase (EPH) zeitlich vor der Sende-Empfang-Phase (SEPH) angeordnet wird.

3. Verfahren nach Anspruch 2,
**dadurch gekennzeichnet, dass**
das Ablaufschema (A) der Knoten (K1, K2, K3) mit einer konstanten Zeitdauer (TA) betrieben wird, wobei für den Fall, dass für einen der Knoten (K1) eine zeitliche Lage seines Ablaufschemas (A) gegenüber einem Ablaufschema (A) eines der anderen Knoten (K2, K3) verändert wird, eines der Ablaufschemata (A) dieses Knotens (K1) mit einer zu der konstanten Zeitdauer (TA) verschiedenen Zeitdauer betrieben wird.

4. Verfahren nach Anspruch 2 oder 3,
**dadurch gekennzeichnet, dass**
während der Kommunikationsphase (KPH) eines ersten Knotens (K1) der Gruppe die Aktivierungsphase (TPH) eines zweiten Knotens (K2) der Gruppe erkannt wird,
eine erste Zeitdauer (ZD1) zwischen der Aktivierungsphase (TPH) des ersten Knotens (K1) und der Aktivierungsphase (TPH) des zweiten Knotens (K2) bestimmt wird,
falls die erste Zeitdauer (ZD1) eine minimale Zeitdauer (ZDmin) unterschreitet, eine Zeitdauer nur der nächsten Schlafphase (SPH) des ersten Knotens (K1) derart verkürzt wird, dass eine zweite Zeitdauer (ZD2) zwischen der Aktivierungsphase (TPH) des ersten Knotens (K1) und der Aktivierungsphase (TPH) des zweiten Knotens (K2) in dem jeweiligen direkt nachfolgenden Ablaufschema (A) zumindest die minimale Zeitdauer (ZDmin) ist.

5. Verfahren nach Anspruch 4,
**dadurch gekennzeichnet, dass**
die minimale Zeitdauer (ZDmin) durch Multiplikation eines minimalen Prozentsatzes (PZmin) mit einer Zeitdauer der Aktivphase (APH) gebildet wird.

6. Verfahren nach Anspruch 2 oder 3,
**dadurch gekennzeichnet, dass**
während der Kommunikationsphase (KPH) eines ersten Knotens (K1) der Gruppe die Aktivierungsphase (TPH) eines zweiten Knotens (K2) der Gruppe erkannt wird,
eine erste Zeitdauer (ZD1) zwischen der Aktivierungsphase (TPH) des ersten Knotens (K1) und der Aktivierungsphase (TPH) des zweiten Knotens (K2) bestimmt wird,
falls die erste Zeitdauer (ZD1) eine maximale Zeitdauer (ZDmax) überschreitet, eine Zeitdauer nur der nächsten Schlafphase (SPH) des ersten Knotens (K1) derart verlängert wird, dass eine zweite Zeitdauer (ZD2) zwischen der Aktivierungsphase (TPH) des ersten Knotens (K1) und der Aktivierungsphase (TPH) des zweiten Knotens (K2) in dem jeweils direkt nachfolgenden Ablaufschema (A) maximal die maximale Zeitdauer (ZDmax) beträgt.

7. Verfahren nach Anspruch 6,
**dadurch gekennzeichnet, dass**
die maximale Zeitdauer (ZDmax) aus einem maximalen Prozentsatz (PZmax) einer Zeitspanne (ZDAP) der Aktivphase (APH) gebildet wird.

8. Verfahren nach Anspruch 6 oder 7,
**dadurch gekennzeichnet, dass**
die Zeitdauer nur der nächsten Schlafphase (SPH) des ersten Knotens (K1) derart verlängert wird, dass die zweite Zeitdauer (ZD2) maximal der Hälfte der maximalen Zeitdauer (ZDmax) entspricht.

9. Verfahren nach einem der Ansprüche 4 bis 8,
**dadurch gekennzeichnet, dass**

während der Kommunikationsphase (KPH) eines ersten Knotens (K1) der Gruppe die jeweilige Aktivierungsphase (TPH) mehrerer Knoten (K2, K3) der Gruppe erkannt werden,

eine jeweilige erste Zeitdauer (ZD1) zwischen der Aktivierungsphase (TPH) des ersten Knotens (K1) und der Aktivierungsphase (TPH) der jeweiligen Knoten (K2, K3) ermittelt wird,

für die Verfahrenschritte einer der Ansprüche 4 bis 8 derjenige Knoten als zweiter Knoten (K2) verwendet wird, dessen erste Zeitdauer (ZD1) gegenüber den anderen ersten Zeitdauern (ZD1) einen kleinsten Wert aufweist.

10. Verfahren nach Anspruch 2 oder 3,
**dadurch gekennzeichnet, dass**
falls während der Kommunikationsphase (KPH) eines ersten Knotens (K1) der Gruppe die Aktivierungsphase (TPH) eines zweiten Knotens (K2) der Gruppe nicht erkannt und die Sende-Empfang-Phase (SEPH) des zweiten Knoten (K2) detektiert wird, eine Zeitdauer nur der nächsten Schlafphase (SPH) des ersten Knotens (K1) verkürzt wird.

11. Verfahren nach Anspruch 10,
**dadurch gekennzeichnet, dass**
die Zeitdauer um einen Prozentsatz (PZ) einer Zeitspanne (ZDAP) der Aktivphase (APH) reduziert wird.

12. Verfahren nach Anspruch 11,
**dadurch gekennzeichnet, dass**
die Zeitdauer derart gebildet wird, dass bei dem direkt nachfolgenden Ablaufschema (A) des ersten Knotens (K1) die Aktivierungsphase (TPH) des zweiten Knotens (K2) innerhalb der Kommunikationsphase (KPH) des ersten Knotens (K1) ist.

13. Verfahren nach einem der Ansprüche 1 bis 3,
**dadurch gekennzeichnet, dass**
falls während der Kommunikationsphase (KPH) eines ersten Knotens (K1) der Gruppe kein weiterer Knoten erkannt wird, eine Zeitdauer der nur nächsten Schlafphase (SPH) des ersten Knotens (K1) verlängert wird.

14. Verfahren nach einem der Ansprüche 4 bis 13,
**dadurch gekennzeichnet, dass**
das Verkürzen oder Verlängern einer Zeitdauer der Schlafphase (SPH) durch einen Jitterfaktor (JF) variiert wird.

15. Verfahren nach Anspruch 14,
**dadurch gekennzeichnet, dass**
der Jitterfaktor (JF) aus einem um Null symmetrischen Wertebereich zufällig ausgewählt wird.

16. Verfahren nach einem der Ansprüche 4 bis 15,
**dadurch gekennzeichnet, dass**
ein weiterer Knoten (K3) der Gruppe von einer Änderung seiner Schlafphase (SPH) gemäß einem der Ansprüche 4 bis 15 ausgeschlossen wird.

17. Verfahren nach einem der vorhergehenden Ansprüche,
**dadurch gekennzeichnet, dass**
für eine Unicast-Kommunikation zum Senden von Daten (DATA) von einem ersten Knoten (K1) der Gruppe zu einem zweiten Knoten (K2) der Gruppe die Daten (DATA) zu Beginn der Sende-Empfang-Phase (SEPH) des ersten Knotens (K1) verschickt werden, falls die Aktivierungsphase (TPH) des zweiten Knotens (K2) innerhalb der Schlafphase des ersten Knotens (K1) liegt.

18. Verfahren nach einem der Ansprüche 1 bis 16,
**dadurch gekennzeichnet, dass**
für eine Broadcast-Kommunikation zum Senden von Daten (DATA) von einem ersten Knoten (K1) der Gruppe zu mehreren weiteren Knoten (K2, K3) der Gruppe die Daten (DATA) dann geschickt werden, wenn sich die weiteren Knoten (K2, K3) in ihrer jeweiligen Kommunikationsphase (KPH) befinden, falls zumindest zwei der weiteren Knoten ihre jeweilige Aktivierungsphase (TPH) innerhalb der Kommunikationsphase (KPH) des ersten Knotens (K1) haben.

19. Verfahren nach Anspruch 18,
**dadurch gekennzeichnet, dass**
falls eine Zeitdauer, in der sich die zumindest zwei der weiteren Knoten in ihrer jeweiligen Kommunikationsphase (KPH) befinden, eine minimale Aktivierungszeitdauer unterschreitet, ein Zeitpunkt zum Versenden der Daten (DATA) um eine vorgebbare Zeitdauer zeitlich vorgeschoben wird.

20. Verfahren nach einem der Ansprüche 1 bis 16,
**dadurch gekennzeichnet, dass**
für eine Broadcast-Kommunikation zum Senden von Daten (DATA) von einem ersten Knoten (K1) der Gruppe zu mehreren weiteren Knoten (K2, K3) der Gruppe die Daten (DATA) zu Beginn der Sende-Empfang-Phase (SEPH) des ersten Knotens (K1) verschickt werden, falls die Aktivierungsphasen (TPH) aller weiteren Knoten (K2, K3) während der Kommunikationsphase (SPH) des ersten Knotens (K1) nicht erkannt werden.

21. Knoten (K1) zum Austausch von Daten (DATA) in einem Netzwerk (NET), insbesondere in einem Mesh-Netzwerk, mit einer Gruppe an Knoten (K1, K2, K3),
**dadurch gekennzeichnet, dass**
der Knoten (K1) zumindest ein Mittel (MM) aufweist zum Betreiben des Knotens (K1) mit einem sich zeitlich wiederholenden Ablaufschema (A),
Bilden des Ablaufschemas (A) in zeitlicher Abfolge durch eine Aktivphase (APH) und gefolgt von einer Schlafphase (SPH), Bilden der Aktivphase (APH) in zeitlicher Abfolge aus einer Aktivierungsphase (TPH) zum Mitteilen des Starts der Aktivphase (APH) und gefolgt von einer Kommunikationsphase (KPH), Bilden der Kommunikationsphase (KPH) durch eine Empfangsphase (EPH) zum lediglich Empfangen von Daten (DATA) und eine Sende-Empfang-Phase (SEPH) zum Empfangen und Senden von Daten (DATA).

22. Knoten (K1) nach Anspruch 21,
**dadurch gekennzeichnet, dass**
das Mittel (MM) ferner derart ausgebildet ist, dass ein Verfahren zum Durchführen aller Schritte nach einem der Ansprüche 2 bis 16 ausführbar ist.

23. Netzwerk (NET), insbesondere ein Mesh-Netzwerk, zum Austausch von Daten (DATA) mit einer Gruppe an Knoten (K1, K2, K3),
**dadurch gekennzeichnet, dass**
zumindest zwei der Knoten (K1, K2) der Gruppe jeweils Mittel (MM) aufweisen, die zum Durchführen aller Schritte eines Verfahrens nach einem der Ansprüche 1 bis 20 ausgestaltet sind.

**Claims**

1. Method for exchanging data (DATA) in a network (NET), in particular in a mesh network, comprising a group of nodes (K1, K2, K3), wherein
the respective node (K1) is operated in each case with a duty cycle scheme (A) repeating in time,
the duty cycle scheme (A) is formed in chronological sequence by an active phase (APH) followed by a sleep phase (SPH),
the active phase (APH) is formed in chronological sequence from an activation phase (TPH) for communicating the start of the active phase (APH), followed by a communication phase (KPH),
the communication phase (KPH) is formed by a receive phase (EPH) for only receiving data (DATA) and a transmit-receive phase (SEPH) for sending and receiving data (DATA).

2. Method according to claim 1,
**characterised in that**
in the communication phase (KPH) the receive phase (EPH) is arranged ahead of the transmit-receive phase (SEPH) in time.

3. Method according to claim 2,
**characterised in that**
the duty cycle scheme (A) of the nodes (K1, K2, K3) is operated with a constant time period (TA), wherein if a position in time of a duty cycle scheme (A) for one of the nodes (K1) is changed with respect to a duty cycle scheme (A) of one of the other nodes (K2, K3), one of the duty cycle schemes (A) of said node (K1) is operated with a time period different from the constant time period (TA).

4. Method according to claim 2 or 3,

**characterised in that**
during the communication phase (KPH) of a first node (K1) of the group the activation phase (TPH) of a second node (K2) of the group is detected,
a first time period (ZD1) between the activation phase (TPH) of the first node (K1) and the activation phase (TPH) of the second node (K2) is determined,
if the first time period (ZD1) is less than a minimum time period (ZDmin), a time period only of the next sleep phase (SPH) of the first node (K1) is shortened such that a second time period (ZD2) between the activation phase (TPH) of the first node (K1) and the activation phase (TPH) of the second node (K2) in the respective directly following duty cycle scheme (A) is at least the minimum time period (ZDmin).

5. Method according to claim 4,
**characterised in that**
the minimum time period (ZDmin) is formed through multiplication of a minimum percentage (PZmin) by a time period of the active phase (APH).

6. Method according to claim 2 or 3,
**characterised in that**
during the communication phase (KPH) of a first node (K1) of the group the activation phase (TPH) of a second node (K2) of the group is detected,
a first time period (ZD1) between the activation phase (TPH) of the first node (K1) and the activation phase (TPH) of the second node (K2) is determined,
if the first time period (ZD1) exceeds a maximum time period (ZDmax), a time period only of the next sleep phase (SPH) of the first node (K1) is extended such that a second time period (ZD2) between the activation phase (TPH) of the first node (K1) and the activation phase (TPH) of the second node (K2) in the respective directly following duty cycle scheme (A) amounts at maximum to the maximum time period (ZDmax).

7. Method according to claim 6,
**characterised in that**
the maximum time period (ZDmax) is formed from a maximum percentage (PZmax) of a time span (ZDAP) of the active phase (APH).

8. Method according to claim 6 or 7,
**characterised in that**
the time period only of the next sleep phase (SPH) of the first node (K1) is extended such that the second time period (ZD2) is equivalent at maximum to half the maximum time period (ZDmax).

9. Method according to one of claims 4 to 8,
**characterised in that**
during the communication phase (KPH) of a first node (K1) of the group the respective activation phase (TPH) of a plurality of nodes (K2, K3) of the group is detected,
a respective first time period (ZD1) between the activation phase (TPH) of the first node (K1) and the activation phase (TPH) of the respective nodes (K2, K3) is determined,
for the method steps of one of claims 4 to 8 the node used as the second node (K2) is that whose first time period (ZD1) has a smallest value compared with the other first time periods (ZD1).

10. Method according to claim 2 or 3,
**characterised in that** if, during the communication phase (KPH) of a first node (K1) of the group, the activation phase (TPH) of a second node (K2) of the group is not detected and the transmit-receive phase (SEPH) of the second node (K2) is detected, a time period only of the next sleep phase (SPH) of the first node (K1) is shortened.

11. Method according to claim 10,
**characterised in that**
the time period is reduced by a percentage (PZ) of a time span (ZDAP) of the active phase (APH).

12. Method according to claim 11,
**characterised in that**
the time period is formed such that in the directly following duty cycle scheme (A) of the first node (K1) the activation phase (TPH) of the second node (K2) is within the communication phase (KPH) of the first node (K1).

**13.** Method according to one of claims 1 to 3,
**characterised in that**
if, during the communication phase (KPH) of a first node (K1) of the group, no other node is detected, a time period only of the next sleep phase (SPH) of the first node (K1) is extended.

**14.** Method according to one of claims 4 to 13,
**characterised in that**
the shortening or lengthening of a time period of the sleep phase (SPH) is varied by means of a jitter factor (JF).

**15.** Method according to claim 14,
**characterised in that**
the jitter factor (JF) is selected at random from a value range that is symmetrical around zero.

**16.** Method according to one of claims 4 to 15,
**characterised in that**
a further node (K3) of the group is excluded from a change to its sleep phase (SPH) according to one of claims 4 to 15.

**17.** Method according to one of the preceding claims,
**characterised in that**
for a unicast communication for sending data (DATA) from a first node (K1) of the group to a second node (K2) of the group, the data (DATA) is sent at the start of the transmit-receive phase (SEPH) of the first node (K1) if the activation phase (TPH) of the second node (K2) lies within the sleep phase of the first node (K1).

**18.** Method according to one of claims 1 to 16,
**characterised in that**
for a broadcast communication for sending data (DATA) from a first node (K1) of the group to a plurality of other nodes (K2, K3) of the group, the data (DATA) is sent when the other nodes (K2, K3) are in their respective communication phase (KPH) if at least two of the other nodes have their respective activation phase (TPH) within the communication phase (KPH) of the first node (K1).

**19.** Method according to claim 18,
**characterised in that**
if a time period in which the at least two of the other nodes are in their respective communication phase (KPH) is less than a minimum activation time period, a time instant for sending the data (DATA) is brought forward in time by a predefinable time period.

**20.** Method according to one of claims 1 to 16,
**characterised in that**
for a broadcast communication for sending data (DATA) from a first node (K1) of the group to a plurality of other nodes (K2, K3) of the group, the data (DATA) is sent at the start of the transmit-receive phase (SEPH) of the first node (K1) if the activation phases (TPH) of all other nodes (K2, K3) are not detected during the communication phase (SPH) of the first node (K2).

**21.** Node (K1) for exchanging data (DATA) in a network (NET), in particular in a mesh network, comprising a group of nodes (K1, K2, K3),
**characterised in that**
the node (K1) has at least one means (MM) for
operating the node (K1) with a duty cycle scheme (A) repeating in time,
forming the duty cycle scheme (A) in chronological sequence by means of an active phase (APH) followed by a sleep phase (SPH),
forming the active phase (APH) in chronological sequence from an activation phase (TPH) for communicating the start of the active phase (APH), followed by a communication phase (KPH), forming the communication phase (KPH) by means of a receive phase (EPH) for only receiving data (DATA) and a transmit-receive phase (SEPH) for sending and receiving data (DATA).

**22.** Node (K1) according to claim 21,
**characterised in that**
the means (MM) is furthermore embodied in such a way that a method for performing all steps according to one of claims 2 to 16 can be performed.

23. Network (NET), in particular a mesh network, for exchanging data (DATA) with a group of nodes (K1, K2, K3), **characterised in that**
at least two of the nodes (K1, K2) of the group in each case have means (MM) which are embodied for performing all steps of a method according to one of claims 1 to 20.

**Revendications**

1. Procédé d'échange de données (DATA) dans un réseau (NET), et plus particulièrement dans un réseau maillé, avec un groupe de noeuds (K1, K2, K3), dans lequel :

   - le noeud respectif (K1) est exploité respectivement avec un schéma de déroulement (A) qui se répète dans le temps ;
   - le schéma de déroulement (A) est constitué, dans un ordre temporel, par une phase d'activité (APH) suivie d'une phase de sommeil (SPH);
   - la phase d'activité (APH) est constituée, dans un ordre temporel, à partir d'une phase d'activation (TPH) pour communiquer le démarrage de la phase d'activité (APH), suivie d'une phase de communication (KPH) ;
   - la phase de communication (KPH) est constituée par une phase de réception (EPH) pour uniquement recevoir des données (DATA) et une phase d'émission et de réception (SEPH) pour recevoir et émettre des données (DATA).

2. Procédé selon la revendication 1, **caractérisé en ce que**, dans la phase de communication (KPH), la phase de réception (EPH) précède temporellement la phase d'émission et de réception (SEPH).

3. Procédé selon la revendication 2, **caractérisé en ce que** le schéma de déroulement (A) des noeuds (K1, K2, K3) est exploité avec une durée de temps constante (TA) tout en étant que, pour le cas où, pour l'un des noeuds (K1), une position temporelle de son schéma de déroulement (A) est modifiée par rapport à un schéma de déroulement (A) de l'un des autres noeuds (K2, K3), l'un des schémas de déroulement (A) de ce noeud (K1) est exploité avec une durée de temps différente de la durée de temps constante (TA).

4. Procédé selon la revendication 2 ou 3, **caractérisé en ce que** :

   - pendant la phase de communication (KPH) d'un premier noeud (K1) du groupe, la phase d'activation (TPH) d'un deuxième noeud (K2) du groupe est reconnue ;
   - il est déterminé une première durée de temps (ZD1) entre la phase d'activation (TPH) du premier noeud (K1) et la phase d'activation (TPH) du deuxième noeud (K2) ;
   - si la première durée de temps (ZD1) tombe en dessous d'une durée de temps minimale (ZDmin), une durée de temps uniquement de la phase de sommeil suivante (SPH) du premier noeud (K1) est raccourcie de manière telle qu'une deuxième durée de temps (ZD2) entre la phase d'activation (TPH) du premier noeud (K1) et la phase d'activation (TPH) du deuxième noeud (K2), dans le schéma de déroulement (A) respectif qui suit directement, est au moins la durée de temps minimale (ZDmin).

5. Procédé selon la revendication 4, **caractérisé en ce que** la durée de temps minimale (ZDmin) est formée par multiplication d'un pourcentage minimal (PZmin) par une durée de temps de la phase d'activité (APH).

6. Procédé selon la revendication 2 ou 3, **caractérisé en ce que** :

   - pendant la phase de communication (KPH) d'un premier noeud (K1) du groupe, la phase d'activation (TPH) d'un deuxième noeud (K2) du groupe est reconnue ;
   - il est déterminé une première durée de temps (ZD1) entre la phase d'activation (TPH) du premier noeud (K1) et la phase d'activation (TPH) du deuxième noeud (K2) ;
   - si la première durée de temps (ZD1) dépasse une durée de temps maximale (ZDmax), une durée de temps uniquement de la phase de sommeil suivante (SPH) du premier noeud (K1) est prolongée de manière telle qu'une deuxième durée de temps (ZD2) entre la phase d'activation (TPH) du premier noeud (K1) et la phase d'activation (TPH) du deuxième noeud (K2), dans le schéma de déroulement (A) respectif qui suit directement, équivaut au maximum à la durée de temps maximale (ZDmax).

**7.** Procédé selon la revendication 6, **caractérisé en ce que** la durée de temps maximale (ZDmax) est constituée par un pourcentage maximal (PZmax) d'un laps de temps (ZDAP) de la phase d'activité (APH).

**8.** Procédé selon la revendication 6 ou 7, **caractérisé en ce que** la durée de temps uniquement de la phase de sommeil suivante (SPH) du premier noeud (K1) est prolongée de manière telle que la deuxième durée de temps (ZD2) correspond au maximum à la moitié de la durée de temps maximale (ZDmax).

**9.** Procédé selon l'une des revendications 4 à 8, **caractérisé en ce que** :

- pendant la phase de communication (KPH) d'un premier noeud (K1) du groupe, la phase d'activation (TPH) respective de plusieurs noeuds (K2, K3) du groupe est reconnue ;
- il est déterminé une première durée de temps (ZD1) respective entre la phase d'activation (TPH) du premier noeud (K1) et la phase d'activation (TPH) des noeuds respectifs (K2, K3) ;
- est utilisé en tant que deuxième noeud (K2), pour les étapes de l'une des revendications 4 à 8, le noeud dont la première durée de temps (ZD1) présente une valeur qui est la plus petite par rapport aux autres premières durées de temps (ZD1).

**10.** Procédé selon la revendication 2 ou 3, **caractérisé en ce que**, si, pendant la phase de communication (KPH) d'un premier noeud (K1) du groupe, la phase d'activation (TPH) d'un deuxième noeud (K2) du groupe n'est pas reconnue et la phase d'émission et de réception (SEPH) du deuxième noeud (K2) est détectée, une durée de temps uniquement de la phase de sommeil suivante (SPH) du premier noeud (K1) est raccourcie.

**11.** Procédé selon la revendication 10, **caractérisé en ce que** la durée de temps est réduite d'un pourcentage (PZ) d'un laps de temps (ZDAP) de la phase d'activité (APH).

**12.** Procédé selon la revendication 11, **caractérisé en ce que** la durée de temps est constituée de manière telle que, pour le schéma de déroulement (A) suivant directement du premier noeud (K1), la phase d'activation (TPH) du deuxième noeud (K2) est dans la phase de communication (KPH) du premier noeud (K2).

**13.** Procédé selon l'une des revendications 1 à 3, **caractérisé en ce que**, si, pendant la phase de communication (KPH) d'un premier noeud (K1) du groupe, aucun autre noeud n'est reconnu, une durée de temps de seulement la phase de sommeil suivante (SPH) du premier noeud (K1) est prolongée.

**14.** Procédé selon l'une des revendications 4 à 13, **caractérisé en ce qu'**un facteur de gigue (JF) fait varier le raccourcissement ou la prolongation d'une durée de temps de la phase de sommeil (SPH).

**15.** Procédé selon la revendication 14, **caractérisé en ce que** le facteur de gigue (JF) est sélectionné aléatoirement dans une plage de valeurs symétrique autour de zéro.

**16.** Procédé selon l'une des revendications 4 à 15, **caractérisé en ce qu'**un autre noeud (K3) du groupe est exclu d'une modification de sa phase de sommeil (SPH) selon l'une des revendications 4 à 15.

**17.** Procédé selon l'une des revendications précédentes, **caractérisé en ce que**, pour une communication unicast pour envoyer des données (DATA) d'un premier noeud (K1) du groupe vers un deuxième noeud (K2) du groupe, les données (DATA) sont envoyées au début de la phase d'émission et de réception (SEPH) du premier noeud (K1) si la phase d'activation (TPH) du deuxième noeud (K2) se trouve dans la phase de sommeil du premier noeud (K1).

**18.** Procédé selon l'une des revendications 1 à 16, **caractérisé en ce que**, pour une communication broadcast pour envoyer des données (DATA) d'un premier noeud (K1) du groupe vers plusieurs autres noeuds (K2, K3) du groupe, les données (DATA) sont envoyées lorsque les autres noeuds (K2, K3) se trouvent dans leur phase de communication respective (KPH) si au moins deux des autres noeuds ont leur phase d'activation (TPH) respective dans la phase de communication (KPH) du premier noeud (K1).

**19.** Procédé selon la revendication 18, **caractérisé en ce que**, si une durée de temps dans laquelle les au moins deux des autres noeuds se trouvent dans leur phase de communication (KPH) respective tombe en dessous d'une durée minimale de temps d'activation, un instant d'émission des données (DATA) est avancé, dans le temps, d'une durée de temps prédéterminable.

**20.** Procédé selon l'une des revendications 1 à 16, **caractérisé en ce que**, pour une communication broadcast pour envoyer des données (DATA) d'un premier noeud (K1) du groupe vers plusieurs autres noeuds (K2, K3) du groupe, les données (DATA) sont envoyées au début de la phase d'émission et de réception (SEPH) du premier noeud (K1) si les phases d'activation (TPH) de tous les autres noeuds (K2, K3) ne sont pas reconnues pendant la phase de communication (SPH) du premier noeud (K2).

**21.** Noeud (K1) pour échanger des données (DATA) dans un réseau (NET), et plus particulièrement un réseau maillé, avec un groupe de noeuds (K1, K2, K3), **caractérisé en ce que** :

- le noeud (K1) comporte au moins un moyen (MM) pour exploiter le noeud (K1) avec un schéma de déroulement (A) qui se répète dans le temps ; et par
- la constitution du schéma de déroulement (A) dans un ordre temporel par une phase d'activité (APH) suivie d'une phase de sommeil (SPH) ;
- la constitution de la phase d'activité (APH) dans un ordre temporel à partir d'une phase d'activation (TPH) pour communiquer le démarrage de la phase d'activité (APH), suivie d'une phase de communication (KPH) ;
- la constitution de la phase de communication (KPH) par une phase de réception (EPH) pour uniquement recevoir des données (DATA) et une phase d'émission et de réception (SEPH) pour recevoir et émettre des données (DATA).

**22.** Noeud (K1) selon la revendication 21, **caractérisé en ce que** le moyen (MM) est en outre réalisé de manière telle que peut être exécuté un procédé permettant d'exécuter toutes les étapes selon l'une des revendications 2 à 16.

**23.** Réseau (NET), et plus particulièrement réseau maillé, pour échanger des données (DATA) avec un groupe de noeuds (K1, K2, K3), **caractérisé en ce qu'**au moins deux des noeuds (K1, K2) du groupe comportent respectivement des moyens (MM) qui sont réalisés pour exécuter toutes les étapes d'un procédé selon l'une des revendications 1 à 20.

# FIG 1

# FIG 2

# FIG 3

# FIG 4

## FIG 5

```
                          ┌─────────┐
                          │   STA   │
                          └────┬────┘
                               │
                          ┌────▼────┐
                          │         │──── S0
                          └────┬────┘
                               │ S1
                          ┌────▼────┐
                   ┌──────◇         ◇──────┐
                   │       └─────────┘      │
                   │ S2                     │ S8
              ┌────▼────┐             ┌─────▼────┐
          J  ◇ ZDmin ?  ◇  N      J  ◇          ◇  N
         ┌───└─────────┘───┐     ┌───└──────────┘───┐
  S3     │                 │ S5  │ S9               │ S10
 ┌───────▼──┐         ┌────▼────┐│┌──────────┐  ┌───▼──────────┐
 │    Tr    │     J  ◇ ZDmax ? ◇ ││Tr=ca·ZDAP│  │ Tr=ns·ZDAP   │
 └────┬─────┘    ┌───└─────────┘──┐└────┬─────┘  └───┬──────────┘
      │          │ S6          S7 │     │            │
      │     ┌────▼────┐   ┌───────▼──┐  │            │
      │     │   Tr    │   │    Tr    │  │            │
      │     └────┬────┘   └────┬─────┘  │            │
      │          └────────┬────┘────────┘            │
      │                   │                          │
      │              ┌────▼────┐                      │
      └─────────────▶│         │──── S4              │
                     └────┬────┘                      │
                          │                           │
                     ┌────▼────┐                      │
                     │   END   │                      │
                     └─────────┘                      │
```

## FIG 6

EP 2 218 286 B1

## FIG 7

## FIG 8

MM (DATA, ZD11, ZD12, PZmin, PZmax, PZ, JF, ji, ZP, ZP', Tr')

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W. Ye et al.** An Energy-Efficient MAC Protocol for Wireless Sensor Networks. *Proceedings of the 21st International Annual Joint Conference of the IEEE Computer and Communications Societies (INFO-COM 2002),* Juni 2002

- **J Polastre et al.** Versatile Low Power Media Access for Wireless Sensor Networks. *Proceedings of the Second ACM Conference on Embedded Networked Sensor Systems (Sen-Sys'04),* 03. November 2004
- Technical Overview of Time Synchronized Mesh Protocol (TSMP). *DustNetworks, //www.dustnetworks.com/docs/TSMP whitepaper.pdf*